# EUROPEAN PATENT APPLICATION

(11) **EP 2 947 887 A1**
(43) Date of publication of application: **25.11.2015**
(21) Application number: 13872175.8
(22) Date of filing: 08.11.2013
(51) Int. Cl.: H04N 21/231, H04N 21/2343, H04N 21/238, H04N 21/2662

(54) **CONTENT SERVER, CONTENT DELIVERY METHOD, CONTENT DELIVERY SYSTEM, CLIENT DEVICE, AND CONTENT ACQUISITION METHOD**

(30) Priority: 18.01.2013 JP 2013007887
(71) Applicant: Sony Corporation, Tokyo 108-0075 (JP)
(72) Inventor: YASUDA, Mikita, Tokyo 108-0075 (JP); IGARASHI, Tatsuya, Tokyo 108-0075 (JP); WATANABE, Kazuhiro, Tokyo 141-0022 (JP)
(74) Representative: D Young & Co LLP
(86) International application number: PCT/JP2013/080263
(87) International publication number: WO 2014/112187

(57) **Abstract**

There is provided a content server including a storage unit configured to store a plurality of encoded data obtained by encoding same contents at different bit rates, and a communication unit configured to transmit a data file including access information related to a part of encoded data among the plurality of encoded data to a client device, and transmit encoded data requested by the client device based on the data file to the client device.

## Description

### Technical Field

The present disclosure relates to a content server, a content distribution method, a content distribution system, a client device, and a content acquisition method.

### Background Art

In recent years, there are widely used the hypertext transfer protocol (HTTP) for transferring contents and the MP4 related to content compression encoding. The HTTP enables not only downloading of contents but also streaming thereof in the Internet. The HTTP streaming is also adopted in network media standards such as "DLNA guidelines" (2006) and "Open IPTV Forum" (2009). Moreover, the MP4 (ISO/IEC-14496-12, 14) can be used not only as a storage format but also as a transmission format for downloading and streaming, for example.

Regarding the streaming, the adaptive bitstreaming (ABS) technique is known, as described in Non-Patent Literature below. The ABS technique is a technique in which a plurality of encoded data having the same contents expressed at different bit rates are stored in a content server so that a client selects any encoded data among such a plurality of encoded data in accordance with a network band and reproduces the encoded data.

In the case of normal streaming, when a network band becomes below a bit rate, the data supply becomes incapable of catching up with the consumption, and the buffering data on the client side is depleted. As a result, the client cannot continue reproduction. By contrast, in the ABS technique, the reproduction data is switched to encoded data of a low bit rate when a band becomes small. Thus, it is possible to suppress breaks during reproduction.

### Citation List

### Patent Literature

Non-Patent Literature 1: MPEG-DASH (Dynamic Adaptive Streaming over HTTP) (URL:http://mpeg.chiariglione.org/standards/mpeg-dash/media-presentation-description-and-segment-formats/text-isoiec-23009-12012-dam-1)
Non-Patent Literature 2: HLS (Http Live Streaming) (URL:https://developer.apple.com/library/ios/#documentation/networkinginternet/co nceptual/streamingmediaguide/Introduction/Introduction.html#//apple_ref/doc/uid/T P40008332-CH1-DontLinkElementID_39)

### Summary of Invention

### Technical Problem

However, it is assumed that the algorithm for selecting a bit rate is different depending on a client. For example, when there is a client that intends to select encoded data of a high bit rate with a preference for image quality, there is a problem that the communication of other clients is congested or that other clients are forced to continue reproduction with low image quality without being able to increase a bit rate, for example. Moreover, a client that performs reproduction with a preference for high image quality may be not able to download encoded data of a desired bit rate and cause congestion.

Then, the present disclosure proposes a new and improved content server, content distribution method, content distribution system, client device, and content acquisition method in order to achieve stable reproduction of contents in a client device.

### Solution to Problem

According to the present disclosure, there is provided a content server including a storage unit configured to store a plurality of encoded data obtained by encoding same contents at different bit rates, and a communication unit configured to transmit a data file including access information related to a part of encoded data among the plurality of encoded data to a client device, and transmit encoded data requested by the client device based on the data file to the client device.

According to the present disclosure, there is provided a content distribution method including storing a plurality of encoded data obtained by encoding same contents at different bit rates, transmitting a data file including access information related to a part of encoded data among the plurality of encoded data to a client device, and transmitting encoded data requested by the client device based on the data file to the client device.

According to the present disclosure, there is provided a content distribution system including a client device. and a content server including a storage unit configured to store a plurality of encoded data obtained by encoding same contents at different bit rates, and a communication unit configured to transmit a data file including access information related to a part of encoded data among the plurality of encoded data to the client device, and transmit encoded data requested by the client device based on the data file to the client device.

According to the present disclosure, there is provided a client device including a communication unit configured to receive, from a content server that stores a plurality of encoded data obtained by encoding same contents at different bit rates, a data file including access information related to the plurality of encoded data through a network, and a selection unit configured to select, from the data file, access information related to any of encoded data among the plurality of encoded data in accordance with a congestion degree of the network. The communication unit receives the encoded data from the content server based on the access information selected by the selection unit.

According to the present disclosure, there is provided a content acquisition method including receiving, from a content server that stores a plurality of encoded data obtained by encoding same contents at different bit rates, a data file including access information related to the plurality of encoded data through a network, selecting, from the data file, access information related to any of encoded data among the plurality of encoded data in accordance with a congestion degree of the network, and receiving the encoded data from the content server based on the selected access information.

### Advantageous Effects of Invention

According to the present disclosure described above, it is possible to achieve stable reproduction of contents in a client device.

### Brief Description of Drawings

[FIG. 1] FIG. 1 is an explanatory diagram illustrating a configuration of a content reproduction system according to an embodiment of the present disclosure.
[FIG. 2] FIG. 2 is an explanatory diagram illustrating a data flow in a content reproduction system according to the present embodiment.
[FIG. 3] FIG. 3 is an explanatory diagram illustrating a concrete example of a play list file.
[FIG. 4] FIG. 4 is an explanatory diagram illustrating a concrete example of a play list file.
[FIG. 5] FIG. 5 is a functional block diagram illustrating a configuration of a content server 10 according to the present embodiment.
[FIG. 6] FIG. 6 is an explanatory diagram illustrating a concrete example of a reconstructed play list file.
[FIG. 7] FIG. 7 is an explanatory diagram illustrating a concrete example of a reconstructed play list file.
[FIG. 8] FIG. 8 is a sequence diagram illustrating an operation of a content reproduction system according to the present embodiment.
[FIG. 9] FIG. 9 is a sequence diagram illustrating an operation of a content reproduction system according to a modification.
[FIG. 10] FIG. 10 is a functional block diagram illustrating a configuration of a content reproduction device 20 according to the present embodiment.

### Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

Moreover, in this specification and the drawings, a plurality of elements that have substantially the same function and structure may be distinguished by providing different alphabets after the same reference signs. For example, a plurality of elements that have substantially the same function and structure or logical significance are distinguished as content reproduction devices 20A, 20B, and 20C, if necessary. However, when it is unnecessary to distinguish each of a plurality of elements that have substantially the same function and structure, only the same reference sign is provided. For example, when it is unnecessary to particularly distinguish the content reproduction devices A, 20B, and 20C, the content reproduction devices are simply referred to as content reproduction devices 20.

Moreover, the present disclosure will be described following the item order described below.
1. Overview of content reproduction system
2. First embodiment
   2-1. Configuration of content server
   2-2. Operation of content reproduction system
   2-3. Modification
3. Second embodiment
   3-1. Configuration of content reproduction device
   3-2. Modification
4. Conclusion

### <1. Overview of content reproduction system>

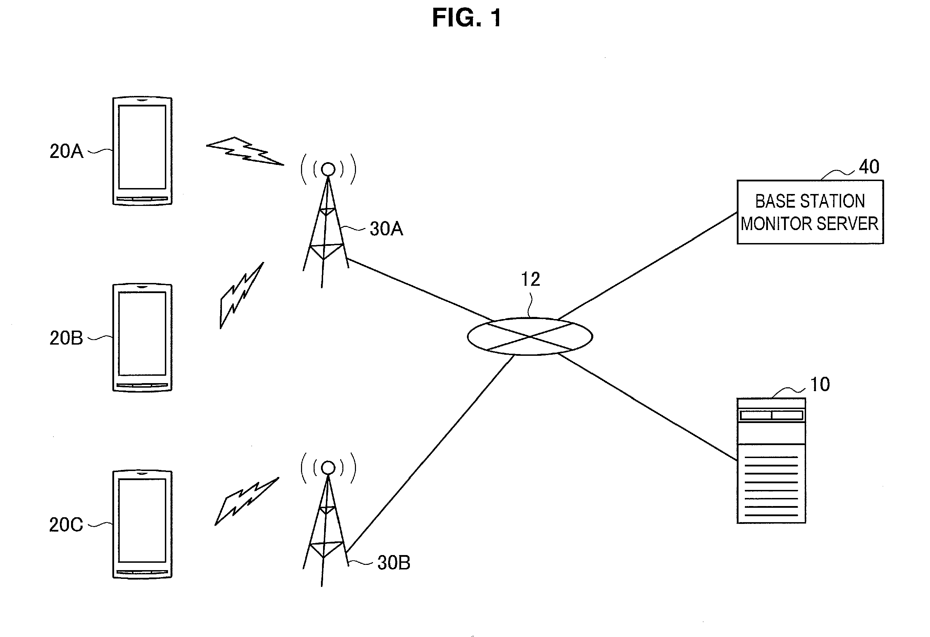

First, a content reproduction system according to an embodiment of the present disclosure will be schematically described with reference to FIG. 1 to FIG. 4.

FIG. 1 is an explanatory diagram illustrating a configuration of a content reproduction system according to an embodiment of the present disclosure. As illustrated in FIG. 1, the content reproduction system according to the embodiment of the present disclosure includes a content server 10, a network 12, content reproduction devices 20 (client devices), a radio base station 30, and a base station monitor server 40.

The content server 10 and the content reproduction device 20 are connected through the network 12 including the radio base station 30. The network 12 is a wired or wireless transmission path of information transmitted from a device connected to the network 12.

For example, the network 12 may include public networks such as the Internet, a telephone network, and a satellite communication network, various kinds of local area networks (LAN) including Ethernet (registered trademark), and a wide area network (WAN), for example. Moreover, the network 12 may include a dedicated network such as the Internet protocol-virtual private network (IP-VPN).

The base station monitor server 40 monitors the communication state of each base station 30 and measures the congestion degree of each base station 30 in real time.

The content server 10 encodes content data, and generates and stores a data file including encoded data and meta information of the encoded data. Note that, when the content server 10 generates an MP4-format data file, the encoded data corresponds to "mdat", and the meta information corresponds to "moov".

Moreover, the content data may be music data such as music, lectures, and radio programs, image data such as movies, television programs, video programs, pictures, documents, drawings, and diagrams, games, and software, for example.

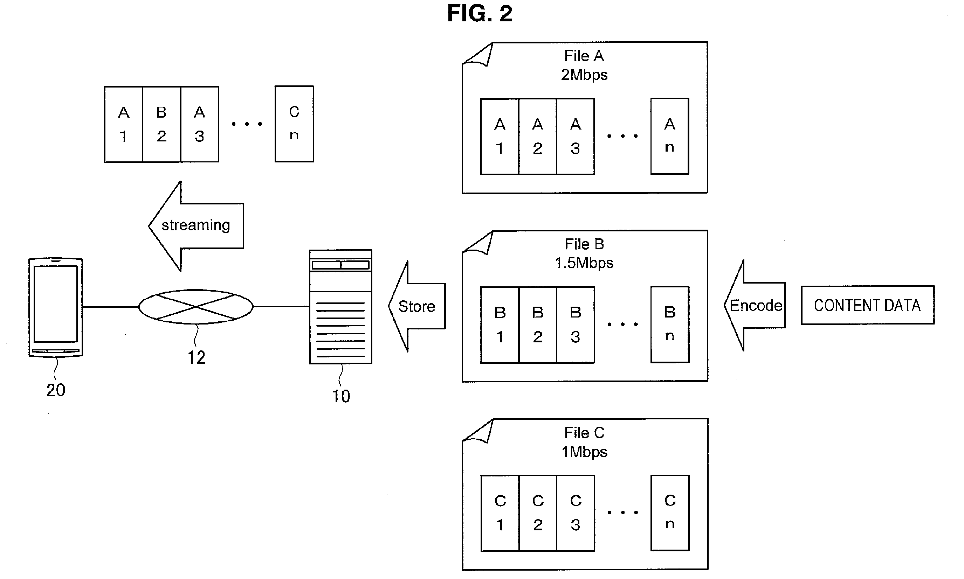

Here, the content server 10 according to the present embodiment generates a plurality of data files of different bit rates regarding the same contents. In the following, this matter will be described concretely with reference to FIG. 2.

FIG. 2 is an explanatory diagram illustrating a data flow in the content reproduction system according to the present embodiment. The content server 10 encodes the same content data at different bit rates, and generates a file A of 2 Mbps, a file B of 1.5 Mbps, and a file C of 1Mbps, for example, as illustrated in FIG. 2. Relatively, the file A is of high bit rate, the file B is of standard bit rate, and the file C is of low bit rate.

Moreover, as illustrated in FIG. 2, the encoded data of each file is divided into a plurality of segments. For example, the encoded data of the file A is divided into segments "A1", "A2", "A3", ...... "An". The encoded data of the file B is divided into segments "B1", "B2", "B3", ...... "Bn". The encoded data of the file C is divided into segments "C1", "C2", "C3", ...... "Cn".

Note that each segment may be constituted by configuration samples of one or two or more pieces of video encoded data and sound encoded data that begin with an MP4 sync sample (IDR-picture in AVC/H.264 video encoding) and can be reproduced independently. For example, when video data of 30 frames per second is encoded in a group of picture (GOP) with a 15-frame fixed length, each segment may be two-second video and sound encoded data corresponding to 4GOP or 10-second video and sound encoded data corresponding to 20 GOP.

Moreover, a reproduction range (range of a time position from the head of contents) by a segment with the same arrangement order in each file is the same. For example, the reproduction ranges of the segment "A2", the segment "B2", and the segment "C2" are the same, and when each segment is two-second encoded data, the reproduction range of any of the segment "A2", the segment "B2", and the segment "C2" is two seconds to four seconds of contents.

The content server 10 generates the file A to the file C constituted by such a plurality of segments, and stores the file A to the file C. Then, the content server 10 sequentially transmits the segments constituting different files to the content reproduction device 20, as illustrated in FIG. 2, and the content reproduction device 20 streaming-reproduces the received segments.

Here, the content server 10 according to the present embodiment transmits a play list file including bit rate information and access information of each file to the content reproduction device 20. Based on the play list file, the content reproduction device 20 selects any bit rate among a plurality of bit rates, and requests the content server 10 to transmit a segment corresponding to the selected bit rate.

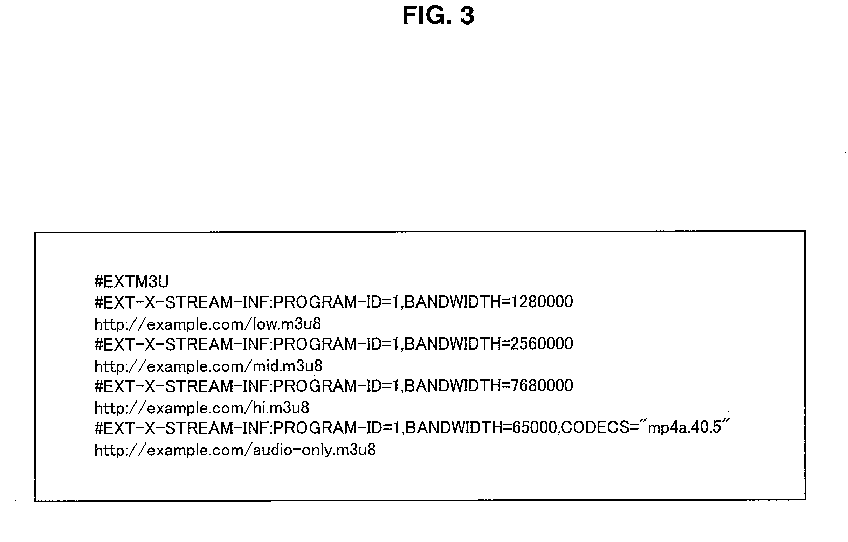

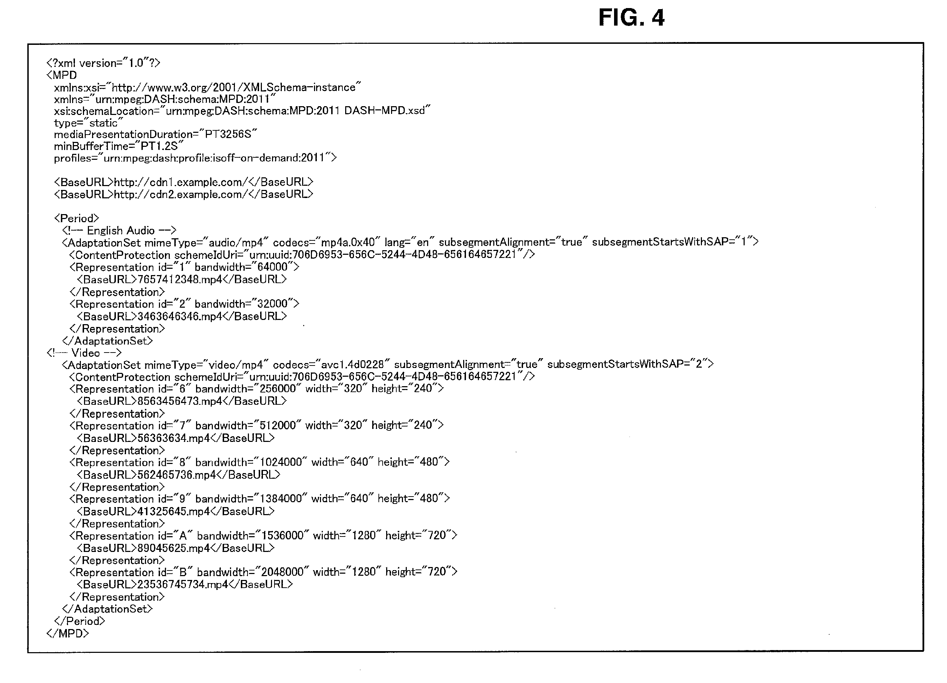

FIG. 3 and FIG. 4 are explanatory diagrams illustrating concrete examples of a play list file. To be more specific, FIG. 3 illustrates a play list file by HLS (Http Live Streaming/IETF International draft), and FIG. 4 illustrates a play list file by MPEG DASH (ISO/IEC 23009-1).

As illustrated in FIG. 3 and FIG. 4, the play list file includes access information related to a plurality of encoded data having different bit rates (BADNWIDTH). For example, the play list file illustrated in FIG. 3 indicates the existence of encoded data of 1.28 Mbps, 2.56 Mbps, 7.68 Mbps, and 65 Kbps and includes access information related to each encoded data. The content reproduction device 20 can dynamically change a bit rate of encoded data to be streaming-reproduced based on such a play list.

Note that, although FIG. 1 illustrates a mobile terminal as an example of the content reproduction device 20, the content reproduction device 20 is not limited to such an example. For example, the content reproduction device 20 may be an information processing device such as a personal computer (PC). a home image processor (DVD recorder, video deck, etc.), personal digital assistants (PDA), a home game machine, and household electrical appliances. Moreover, the content reproduction device 20 may be an information processing device such as a cellular phone, a personal handyphone system (PHS), a portable music reproduction device, a portable image processor, and a portable game machine.

### <2. First embodiment>

In the above, the overview of the content reproduction system according to the embodiment of the present disclosure has been described with reference to FIG. 1 to FIG. 4. Subsequently, a first embodiment of the present disclosure will be described. In the first embodiment of the present disclosure, the above-described play list file is appropriately reconstructed and provided to the content reproduction device 20.

### (2-1. Configuration of content server)

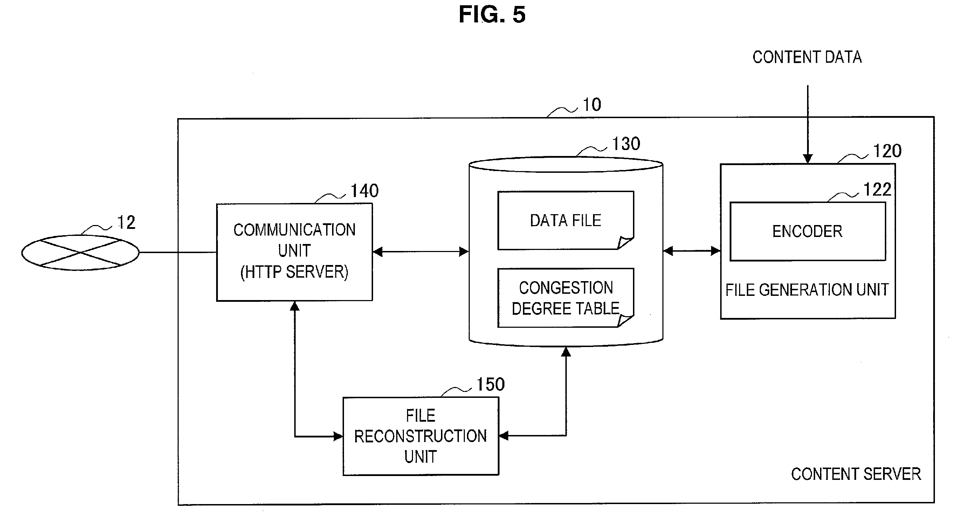

FIG. 5 is a functional block diagram illustrating a configuration of the content server 10 according to the present embodiment. As illustrated in FIG. 5, the content server 10 according to the present embodiment includes a file generation unit 120, a storage unit 130, a communication unit 140, and a file reconstruction unit 150.

The file generation unit 120 includes an encoder 122 that encodes content data, and generates, as a data file, a play list file including a plurality of encoded data of different bit rates and access information related to each encoded data. For example, when the file generation unit 120 has generated encoded data of 1.28 Mbps, 2.56 Mbps, 7.68 Mbps, and 65 Kbps, the file generation unit 120 generates the play list file illustrated in FIG. 3.

The storage unit 130 is a storage medium that stores the data file generated by the file generation unit 120 and a congestion degree table. Here, the congestion degree table will be explained concretely.

As described with reference to FIG. 1, the content server 10 distributes encoded data through the radio base station 30. Thus, when the content reproduction devices 20 connected to the radio base station 30 at the same time are increased, and the congestion degree becomes higher, there occur the decrease of bands and the increase of connection delay time, for example. Particularly, the increase of a congestion degree becomes remarkable in the situation where people are gathered such as in a city during commuting time in the morning and the evening.

Such a congestion degree depending on a place and time can be predicted empirically or statistically. The congestion degree table stored in the storage unit 130 is a table for specifying such a congestion degree depending on time and a place and, to be more specific, stores position information, time information, and an index indicating the congestion degree in an associated manner. The index indicating the congestion degree may be a parameter expressed by 0 (vacant state) to 1 (upper limit of the congestion degree), for example.

The storage unit 130, which stores such a congestion degree table or the like, may be a storage medium such as a nonvolatile memory, a magnetic disc, an optical disc, and a magneto optical (MO) disc. The nonvolatile memory is exemplified by an electrically erasable programmable read-only memory (EEPROM) and an erasable programmable read-only memory (EPROM), for example. Moreover, the magnetic disc is exemplified by a hard disc and a disc-shaped magnetic body disc, for example. Moreover, the optical disc is exemplified by a compact disc (CD), a digital versatile disc recordable (DVD-R), and a Blu-ray disc (BD) (registered trademark), for example.

The communication unit 140 is an interface with the content reproduction device 20, and performs communication with the content reproduction device 20 through the network 12. To be more specific, the communication unit 140 has a function as an HTTP server that performs communication with the content reproduction device 20 in accordance with an HTTP. For example, the communication unit 140 extracts, from the storage unit 130, data requested by the content reproduction device 20, in accordance with an HTTP, and transmits the data to the content reproduction device 20 as an HTTP response.

The file reconstruction unit 150 (file processing unit) estimates the congestion degree of the network 12 used by the content reproduction device 20, selects a part of encoded data among a plurality of encoded data of different bit rates stored in the storage unit 130 in accordance with the estimated congestion degree, and reconstructs a play list file including access information related to the selected encoded data. The play list file obtained by the file reconstruction unit 150 is transmitted to the content reproduction device 20 by the communication unit 140 through the network 12.

To be more specific, the file reconstruction unit 150 transmits information indicating the radio base station 30 to which the content reproduction device 20 is connected, to the base station monitor server 40, as an inquiry request for the congestion degree of the radio base station 30. Then, the file reconstruction unit 150 obtains a response of the congestion degree from the base station monitor server 40, thereby estimating the congestion degree of the radio base station 30 to which the content reproduction device 20 is connected.

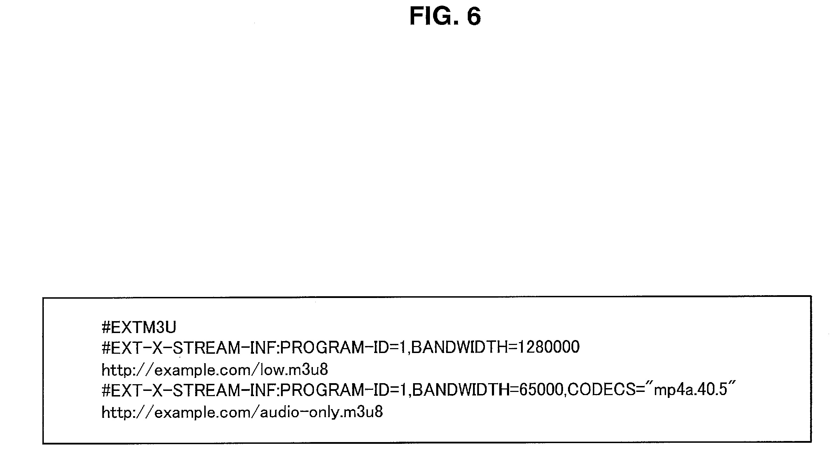

Then, as the congestion degree is higher, the file reconstruction unit 150 may select encoded data excluding a larger amount of encoded data in the order from encoded data higher in bit rate. For example, regarding the original play list file illustrated in FIG. 3, the file reconstruction unit 150 may select encoded data of 65 Kbps and 1.28 Mbps that is encoded data excluding encoded data of two upper bit rates of 2.56 Mbps and 7.68 Mbps, and generate a play list file, as illustrated in FIG. 6.

According to the configuration, the content reproduction device 20 selects encoded data of a lower bit rate, which can suppress the congestion of communication of other content reproduction devices and the occurrence of congestion.

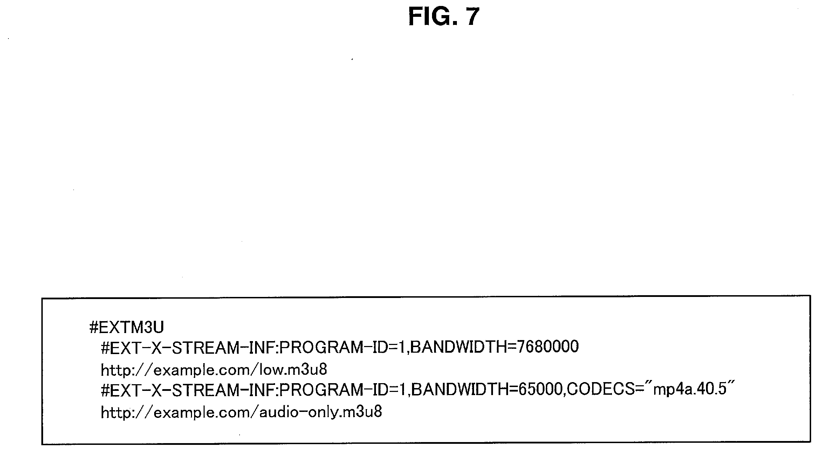

As another example, the file reconstruction unit 150 may remove encoded data of a larger amount of bit rates as the congestion degree is higher, and generate a play list including access information related to encoded data of the remaining bit rates. For example, the file reconstruction unit 150 may remove encoded data of intermediate 1.28 Mbps and 2.56 Mbps from the original play list file illustrated in FIG. 3, and generate a play list file including access information related to encoded data of the remaining 65 Kbps and 7.68 Mbps, as illustrated in FIG. 7.

According to the configuration, the frequency at which the content reproduction device 20 changes a bit rate is reduced. Thus, even when the content reproduction devices 20 connected to the radio base station 30 are increased, it is possible to prevent congestion occurred due to conflict for a band among the content reproduction devices 20 and achieve stable reproduction.

Note that the file reconstruction unit 150 may update the above-described play list file with the position change of the content reproduction device 20 or the lapse of time.

### (2-2. Operation of content reproduction system)

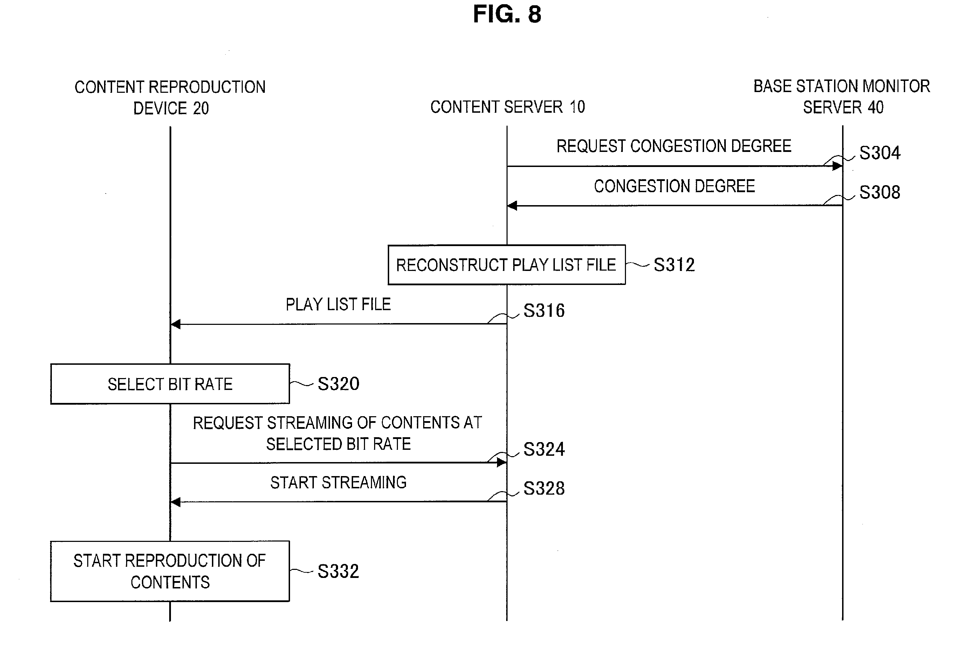

In the above, the configuration of the content server 10 according to the present embodiment has been described. Next, the operation of the content reproduction system according to the present embodiment will be organized with reference to FIG. 8.

FIG. 8 is a sequence diagram illustrating an operation of the content reproduction system according to the present embodiment. When the content reproduction device 20 has requested the content server 10 to transmit a play list file, the content server 10 transmits information indicating the radio base station 30 to which the content reproduction device 20 is connected, to the base station monitor server 40, as an inquiry request for the congestion degree of the radio base station 30 (S304). Then, in response to the inquiry request for the congestion degree, the base station monitor server 40 notifies the content server 10 of the congestion degree of the radio base station 30 to which the content reproduction device 20 is connected (S308).

Subsequently, the file reconstruction unit 150 selects a part of encoded data among a plurality of encoded data of different bit rates stored in the storage unit 130 in accordance with the notified congestion degree, and reconstructs a play list file including access information related to the selected encoded data (S312). Then, the communication unit 140 transmits the play list file obtained by the file reconstruction unit 150 to the content reproduction device 20 (S312).

Thereafter, the content reproduction device 20 selects a bit rate among a plurality of bit rates corresponding to a plurality of encoded data indicated by the play list file (S320), and requests the content server to perform streaming of contents at the selected bit rate (S324).

In response to the request from the content reproduction device 20, the content server 10 starts streaming at the bit rate selected by the content reproduction device 20 (S328), and the content reproduction device 20 starts reproduction of the contents (S332).

As described in the above, the content server 10 according to the present embodiment transmits a play list file with reproduction options restricted depending on the congestion degree to the content reproduction device 20. Thus, it is possible to achieve stable reproduction of contents in the content reproduction device 20.

### (2-3. Modification)

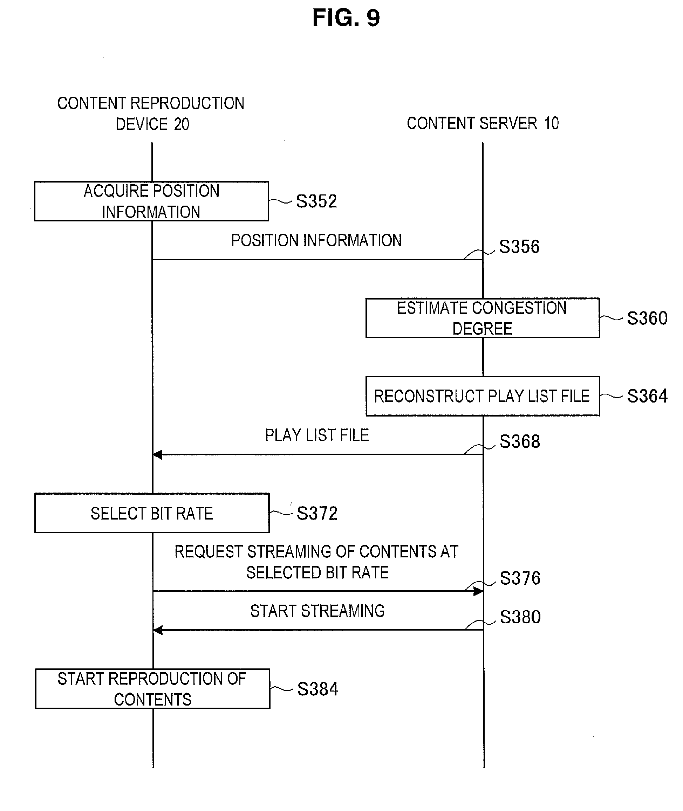

Note that although the above has explained the example in which the content server 10 is notified of the congestion degree by the base station monitor server 40, the present embodiment is not limited to such an example. As a modification, the file reconstruction unit 150 may estimate the congestion degree by acquiring position information of the content reproduction device 20 and extracting the congestion degree stored in the storage unit 130 in association with the position information of the content reproduction device 20 and position information and time information corresponding to current time. In the following, the operation of the operation of the content reproduction system according to the modification will be described with reference to FIG. 9.

FIG. 9 is a sequence diagram illustrating an operation of a content reproduction system according to a modification. As illustrated in FIG. 9, the content reproduction device 20 acquires position information (S352) and transmits the acquired position information to the content server 10 (S356). Note that the content reproduction device 20 may acquire position information by the global positioning system (GPS), for example, and embed the position information in a URL as a URL query parameter when requesting the content server 10 to transmit a play list file.

Then, the file reconstruction unit 150 estimates the congestion degree by extracting the congestion degree stored in the storage unit 130 in association with the position information of the content reproduction device 20 and position information and time information corresponding to current time (S360).

Subsequently, the file reconstruction unit 150 selects a part of encoded data among a plurality of encoded data of different bit rates stored in the storage unit 130 in accordance with the estimated congestion degree, and reconstructs a play list file including access information related to the selected encoded data (S364). Then, the communication unit 140 transmits the play list file obtained by the file reconstruction unit 150 to the content reproduction device 20 (S368).

Thereafter, the content reproduction device 20 selects a bit rate among a plurality of bit rates corresponding to a plurality of encoded data indicated by the play list file (S372), and requests the content server to perform streaming of contents at the selected bit rate (S376).

In response to the request from the content reproduction device 20, the content server 10 starts streaming at the bit rate selected by the content reproduction device 20 (S380), and the content reproduction device 20 starts reproduction of the contents (S384).

### <3. Second embodiment>

In the above, the first embodiment of the present disclosure has been described. Subsequently, a second embodiment of the present disclosure will be described. The second embodiment of the present disclosure is different from the first embodiment in the aspect that the content reproduction device 20 selects a bit rate while considering the congestion degree of the network 12.

### (3-1. Configuration of content reproduction device)

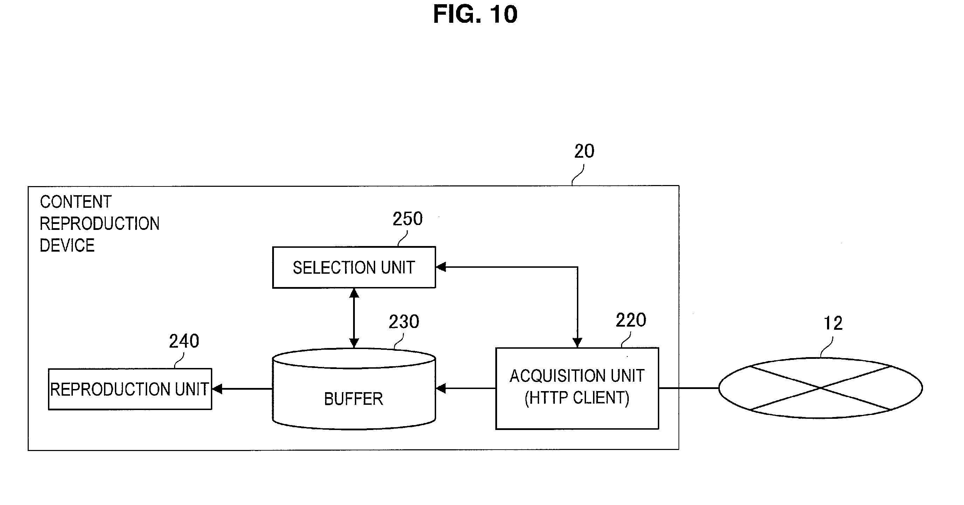

FIG. 10 is a functional block diagram illustrating a configuration of the content reproduction device 20 according to the present embodiment. As illustrated in FIG. 10, the content reproduction device 20 according to the present embodiment includes an acquisition unit 220, a buffer 230, a reproduction unit 240, and a selection unit 250.

The acquisition unit 220 (communication unit) is an interface with the content server 10, and requests data from the content server 10 and acquires data from the content server 10. To be more specific, the acquisition unit 220 has a function as an HTTP client that performs communication with the content reproduction device 20 in accordance with an HTTP. For example, the acquisition unit 220 uses an HTTP range and thus can selectively acquire an MPD or a segment of encoded data from the content server 10.

The buffer 230 sequentially buffers segments acquired by the acquisition unit 220 from the content server 10. The segments buffered by the buffer 230 are sequentially supplied to the reproduction unit 240 in a first in first out (FIFO) manner.

The reproduction unit 240 sequentially reproduces the segments supplied from the buffer 230. Concretely, the reproduction unit 240 performs decoding, DA conversion, and rendering of the segments, for example.

The selection unit 250 sequentially selects, in the same contents, segments of encoded data corresponding to certain bit rates included in the play list file that are to be acquired. For example, when the selection unit 250 sequentially selects segments "A1", "B2", and "A3" in accordance with a band of the network 12, the acquisition unit 220 sequentially acquires the segments "A1", "B1", and "A3" from the content server 10, as illustrated in FIG. 2.

Here, the selection unit 250 according to the present embodiment selects encoded data in accordance with the congestion degree of the network 12. To be more specific, the content server 10 acquires the congestion degree in the way described in the first embodiment (inquiry to the base station monitor server 40, reference to the congestion table), and the content server 10 notifies the content reproduction device 20 of the congestion degree. Then, as the congestion degree is higher, the selection unit 250 performs selection among encoded data excluding a larger amount of encoded data in the order from encoded data higher in bit rate. As another example, the selection unit 250 may perform selection among one or two or more pieces of encoded data obtained by removing a larger amount of encoded data from a plurality of encode data.

Note that the content server 10 may notify the content reproduction device 20 of information indicating the congestion degree as a part of a play list file, or transmit information indicating the congestion degree to the content reproduction device 20 as meta data of encoded data.

### (3-2. Modification)

The above has described the example in which the content server 10 transmits information indicating the congestion degree of the network 12 to the content reproduction device 20. However, the content reproduction device 20 may be provided with a congestion degree estimation unit that estimates the congestion degree of the network 12. The following will describe the function of the congestion degree estimation unit, which can be provided in the content reproduction device 20 as a modification. Note that, in the following, the expression communication terminal will be used as a superordinate concept of the content reproduction device 20.

### - Congestion degree of wireless communication service using CDMA -

In the wireless communication service using CDMA, when the number of multiplexed DPCHs (that is, the number of communication terminals that belong to a radio base station), or the number of HS-DSCHs (that is, the number of high-speed downlink shared channels that are shared by a plurality of communication terminals in HSDPA) is increased, each DPCH or each HS-DSCH is diffused but the correlation output of each scramble code is increased considerably. Thus, when the largest correlation output of a scramble code is a, and the smallest correlation output among correlation output of other scramble codes is b, the correlation output b/correlation output a is considered to be larger as the number of communication terminals is increased and free capacity is reduced or as the interference becomes larger.

Then, the congestion degree estimation unit can calculate a ratio between the correlation output a and the correlation output b (b/a) as the congestion degree k_{cong} of the radio base station 30 in CDMA. Note that the congestion degree estimation unit may use, instead of the smallest correlation output b, a value of whole received power (received signal strength indicator (RSSI)) or a value obtained by dividing the RSSI by a diffusion factor.

### - Congestion degree of wireless communication service using OFDMA -

The wireless communication service using OFDMA transmits allocation information of sub-carriers of each frame, as one of control information. For example, in Mobile WiMAX, the allocation information of sub-carriers called DL-MAP is transmitted.

Then, the congestion degree estimation unit can calculate, as the congestion degree k_{cong}, the proportion of the number of sub-carriers already allocated to each communication terminal relative to the total number of sub-carriers in each frame, based on the allocation information of sub-carriers transmitted from the radio base station 30 in OFDMA.

Note that, in LTE using OFDMA for downlink, scheduling control information including downlink resource allocation and uplink scheduling information is notified to each communication terminal using downlink control signals (physical downlink control channel (PDCCH)), similar to WiMAX. The PDCCHs are arranged in the first n-pieces (n ≤ 3) of OFDM symbols in each downlink sub-frame. Therefore, the congestion degree estimation unit may receive the first n-pieces of OFDM symbols, acquire information of resource allocation to each communication terminal, and calculate, as the congestion degree k_{cong}, the proportion of the number of sub-carriers allocated to each communication terminal relative to the total number of sub-carriers in each frame.

### <4. Conclusion>

As described in the above, according to the technique of the present disclosure, the bit rate of encoded data that can be reproduced in the content reproduction device 20 is restricted depending on the congestion degree of the network 12. Thus, even when the content reproduction devices 20 connected to the radio base station 30 are increased, it is possible to prevent congestion occurred due to conflict for a band among the content reproduction devices 20 and achieve stable reproduction.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

For example, each step in the operation of the content reproduction system in the present specification does not need to be necessarily processed in time series following the order illustrated as the sequence diagrams. For example, each step in the operation of the content reproduction system may be processed in the different order from the order illustrated as the sequence diagram or processed in parallel.

Moreover, it is also possible to generate a computer program for exerting the functions equivalent to the above-described elements of the content server 10 and the content reproduction device 20 on hardware such as a central processing unit (CPU), a ROM, and a random-access memory (RAM) provided in the content server 10 and the content reproduction device 20. Moreover, a storage medium that stores the computer program is also provided.

Additionally, the present technology may also be configured as below.
(1) A content server including:
   a storage unit configured to store a plurality of encoded data obtained by encoding same contents at different bit rates; and
   a communication unit configured to transmit a data file including access information related to a part of encoded data among the plurality of encoded data to a client device, and transmit encoded data requested by the client device based on the data file to the client device.
(2) The content server according to (1),
   wherein the content server is connected to the client device through a network, and
   wherein the content server further includes a file processing unit configured to select a part of encoded data among the plurality of encoded data in accordance with a congestion degree of the network and generates the data file including access information related to the selected part of encoded data.
(3) The content server according to (2),
   wherein the storage unit further stores position information, time information, and an index indicating the congestion degree of the network in an associated manner, and
   wherein the file processing unit selects the part of encoded data in accordance with a congestion degree stored in the storage unit in association with position information of the client device and position information and time information corresponding to current time.
(4) The content server according to (2),
   wherein the network includes a radio base station that provides a wireless service to the client device, and
   wherein the file processing unit acquires a congestion degree of a radio base station connected to the client device from an external monitor server, and selects the part of encoded data in accordance with the acquired congestion degree.
(5) The content server according to any one of (2) to (4),
   wherein the file processing unit selects, as the part of encoded data, encoded data excluding a larger amount of encoded data in order from encoded data higher in bit rate as the congestion degree is higher.
(6) The content server according to any one of (2) to (4),
   wherein the file processing unit selects the part of encoded data by removing a larger amount of encoded data as the congestion degree is higher.
(7) The content server according to any one of (2) to (6),
   wherein the file processing unit updates the data file for the client device.
(8) A content distribution method including:
   storing a plurality of encoded data obtained by encoding same contents at different bit rates;
   transmitting a data file including access information related to a part of encoded data among the plurality of encoded data to a client device; and
   transmitting encoded data requested by the client device based on the data file to the client device.
(9) A content distribution system including:
   a client device; and
   a content server including
      a storage unit configured to store a plurality of encoded data obtained by encoding same contents at different bit rates, and
      a communication unit configured to transmit a data file including access information related to a part of encoded data among the plurality of encoded data to the client device, and transmit encoded data requested by the client device based on the data file to the client device.
(10) A client device including:
   a communication unit configured to receive, from a content server that stores a plurality of encoded data obtained by encoding same contents at different bit rates, a data file including access information related to the plurality of encoded data through a network; and
   a selection unit configured to select, from the data file, access information related to any of encoded data among the plurality of encoded data in accordance with a congestion degree of the network,
   wherein the communication unit receives the encoded data from the content server based on the access information selected by the selection unit.
(11) The client device according to (10),
   wherein the communication unit receives information indicating the congestion degree of the network from the content server.
(12) The client device according to (10) or (11),
   wherein the data file includes information indicating the congestion degree of the network.
(13) The client device according to (10) or (11),
   wherein information indicating the congestion degree of the network is included as meta data in the encoded data.
(14) The client device according to any one of (10) to (13),
   wherein the content server stores position information, time information, and an index indicating the congestion degree of the network in an associated manner, and
   wherein the communication unit receives an index indicating the congestion degree stored in the content server in association with position information of the client device and position information and time information corresponding to current time.
(15) The client device according to any one of (10) to (13),
   wherein the network includes a radio base station that provides a wireless service to the client device, and
   wherein information indicating the congestion degree is obtained by a monitor server that measures the congestion degree of a radio base station connected to the client device.
(16) The client device according to any one of (10) to (15),
   wherein the selection unit performs the selection among encoded data excluding a larger amount of encoded data in order from encoded data higher in bit rate as the congestion degree is higher.
(17) The client device according to any one of (10) to (15),
   wherein the selection unit performs the selection among one or two or more pieces of encoded data obtained by removing a larger amount of encoded data from the plurality of encoded data as the congestion degree is higher.
(18) The client device according to (10), further including:
   a congestion degree estimation unit configured to estimate the congestion degree.
(19) The client device according to any one of (10) to (18), further including:
   a reproduction unit configured to reproduce encoded data received from the content server.
(20) A content acquisition method including:
   receiving, from a content server that stores a plurality of encoded data obtained by encoding same contents at different bit rates, a data file including access information related to the plurality of encoded data through a network;
   selecting, from the data file, access information related to any of encoded data among the plurality of encoded data in accordance with a congestion degree of the network; and
   receiving the encoded data from the content server based on the selected access information.

### Reference Signs List

- 10: content server
- 12: network
- 20: content reproduction device
- 30: radio base station
- 40: base station monitor server
- 40: radio base station
- 120: file generation unit
- 122: encoder
- 130: storage unit
- 140: communication unit
- 150: file reconstruction unit
- 220: acquisition unit
- 230: buffer
- 240: reproduction unit
- 250: selection unit

## Claims

1. A content server comprising:
a storage unit configured to store a plurality of encoded data obtained by encoding same contents at different bit rates; and
a communication unit configured to transmit a data file including access information related to a part of encoded data among the plurality of encoded data to a client device, and transmit encoded data requested by the client device based on the data file to the client device.

2. The content server according to claim 1,
wherein the content server is connected to the client device through a network, and
wherein the content server further includes a file processing unit configured to select a part of encoded data among the plurality of encoded data in accordance with a congestion degree of the network and generates the data file including access information related to the selected part of encoded data.

3. The content server according to claim 2,
wherein the storage unit further stores position information, time information, and an index indicating the congestion degree of the network in an associated manner, and
wherein the file processing unit selects the part of encoded data in accordance with a congestion degree stored in the storage unit in association with position information of the client device and position information and time information corresponding to current time.

4. The content server according to claim 2,
wherein the network includes a radio base station that provides a wireless service to the client device, and
wherein the file processing unit acquires a congestion degree of a radio base station connected to the client device from an external monitor server, and selects the part of encoded data in accordance with the acquired congestion degree.

5. The content server according to claim 2,
wherein the file processing unit selects, as the part of encoded data, encoded data excluding a larger amount of encoded data in order from encoded data higher in bit rate as the congestion degree is higher.

6. The content server according to claim 2,
wherein the file processing unit selects the part of encoded data by removing a larger amount of encoded data as the congestion degree is higher.

7. The content server according to claim 2,
wherein the file processing unit updates the data file for the client device.

8. A content distribution method comprising:
storing a plurality of encoded data obtained by encoding same contents at different bit rates;
transmitting a data file including access information related to a part of encoded data among the plurality of encoded data to a client device; and
transmitting encoded data requested by the client device based on the data file to the client device.

9. A content distribution system comprising:
a client device; and
a content server including
a storage unit configured to store a plurality of encoded data obtained by encoding same contents at different bit rates, and
a communication unit configured to transmit a data file including access information related to a part of encoded data among the plurality of encoded data to the client device, and transmit encoded data requested by the client device based on the data file to the client device.

10. A client device comprising:
a communication unit configured to receive, from a content server that stores a plurality of encoded data obtained by encoding same contents at different bit rates, a data file including access information related to the plurality of encoded data through a network; and
a selection unit configured to select, from the data file, access information related to any of encoded data among the plurality of encoded data in accordance with a congestion degree of the network,
wherein the communication unit receives the encoded data from the content server based on the access information selected by the selection unit.

11. The client device according to claim 10,
wherein the communication unit receives information indicating the congestion degree of the network from the content server.

12. The client device according to claim 10 or 11,
wherein the data file includes information indicating the congestion degree of the network.

13. The client device according to claim 10,
wherein information indicating the congestion degree of the network is included as meta data in the encoded data.

14. The client device according to claim 10,
wherein the content server stores position information, time information, and an index indicating the congestion degree of the network in an associated manner, and
wherein the communication unit receives an index indicating the congestion degree stored in the content server in association with position information of the client device and position information and time information corresponding to current time.

15. The client device according to claim 10,
wherein the network includes a radio base station that provides a wireless service to the client device, and
wherein information indicating the congestion degree is obtained by a monitor server that measures the congestion degree of a radio base station connected to the client device.

16. The client device according to claim 10,
wherein the selection unit performs the selection among encoded data excluding a larger amount of encoded data in order from encoded data higher in bit rate as the congestion degree is higher.

17. The client device according to claim 10,
wherein the selection unit performs the selection among one or two or more pieces of encoded data obtained by removing a larger amount of encoded data from the plurality of encoded data as the congestion degree is higher.

18. The client device according to claim 10, further comprising:
a congestion degree estimation unit configured to estimate the congestion degree.

19. The client device according to claim 10, further comprising:
a reproduction unit configured to reproduce encoded data received from the content server.

20. A content acquisition method comprising:
receiving, from a content server that stores a plurality of encoded data obtained by encoding same contents at different bit rates, a data file including access information related to the plurality of encoded data through a network;
selecting, from the data file, access information related to any of encoded data among the plurality of encoded data in accordance with a congestion degree of the network; and
receiving the encoded data from the content server based on the selected access information.
